Europäisches Patentamt

European Patent Office

Office européen des brevets

(19)

(11) Publication number: **0 274 168 B1**

# EUROPEAN PATENT SPECIFICATION

(12)

(45) Date of publication of patent specification: **02.10.91**   (51) Int. Cl.⁵: **B60K 17/35**

(21) Application number: **87300071.5**

(22) Date of filing: **06.01.87**

(54) Power transmission device for a four wheel drive vehicle.

(43) Date of publication of application:
**13.07.88 Bulletin 88/28**

(45) Publication of the grant of the patent:
**02.10.91 Bulletin 91/40**

(84) Designated Contracting States:
**DE GB**

(56) References cited:
**EP-A- 0 131 892**
**EP-A- 0 159 925**
**DE-A- 3 614 847**
**US-A- 4 476 953**
**US-A- 4 601 359**

(73) Proprietor: **AISIN-WARNER KABUSHIKI KAISHA**
**10, Takane Fujii-cho**
**Anjo-shi Aichi-ken 444-11(JP)**

(72) Inventor: **Iwatsuki, Tatsuya AISIN-WARNER K. K.**
**10 Takane Fujii-cho**
**Anjo-shi Aichi-ken(JP)**
Inventor: **Kawamoto, Mutsumi AISIN-WARNER K. K.**
**10 Takane Fujii-cho**
**Anjo-shi Aichi-ken(JP)**
Inventor: **Kano, Takenori AISIN-WARNER K. K.**
**10 Takane Fujii-cho**
**Anjo-shi Aichi-ken(JP)**

(74) Representative: **Gordon, Michael Vincent et al**
**GILL JENNINGS & EVERY 53-64 Chancery Lane**
**London WC2A 1HN(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 274 168 B1

## Description

The present invention relates to a power transmission device for a four wheel drive vehicle, and particularly to a power transmission device for a four wheel drive vehicle based upon a front engine - front wheel drive vehicle. More precisely, it concerns a differential motion limiting mechanism in a power transmission device for a full time four wheel drive vehicle which transmits rotation to the front and rear wheels at all times.

Heretofore, there have been proposed various kinds of power transmission devices for four wheel drive vehicles, which are obtained by slightly modifying power transmission devices for transverse front engine front wheel drive vehicles.

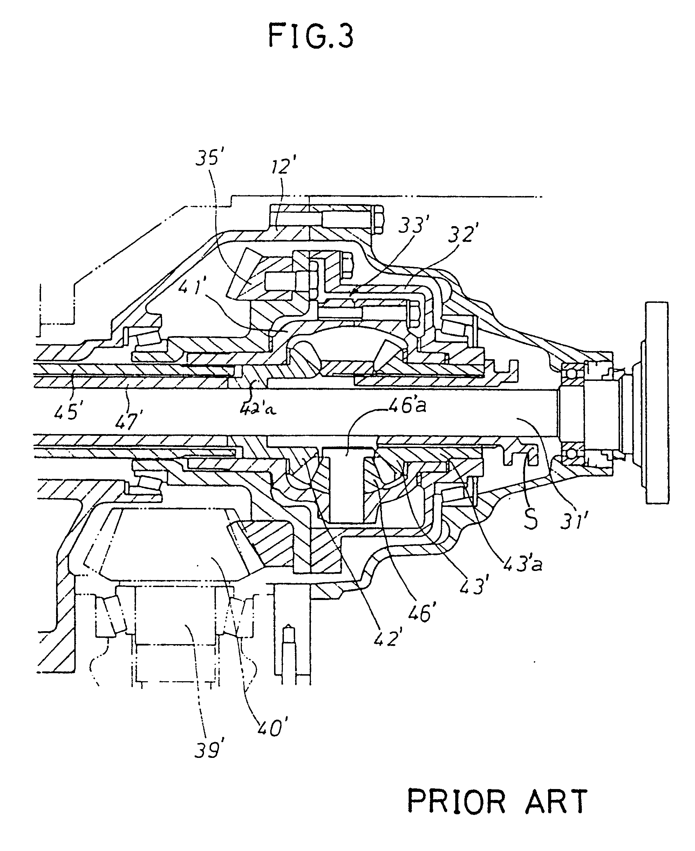

In the above mentioned conventional devices, the manner of operation is as shown in Figure 3, which has been labelled as Prior Art to indicate that it does not embody the present invention, rather than necessarily indicating that its features as illustrated are known. Drive power from an engine is transmitted through a hollow shaft 45' to a differential gear carrier (diff-carrier) 41' rotatably supported in transfer casing 12' on shaft sections 42'a, 43'a of both side gears 42', 43' in a center differential gear 33', and is distributed to both side gears 42', 43' from diff-pinion 46' on the diff-carrier 41'. The drive power transmitted to the left hand side gear 42' is transmitted through another hollow shaft 47' to a front wheel side differential gear (not shown) and distributed among side gears to be transmitted to front axles on both sides (only the right front axle 31' is shown in Fig. 3). The drive power transmitted to the right hand side gear 43' is transmitted through a ring gear mount casing 32' and a rear wheel drive ring gear 35' to a gear 40' and then from a drive pinion shaft 39' through a propeller shaft and a final speed reduction gear (not shown), to be distributed among rear axles on both sides.

It is noted that a center differential gear 33' is indispensable for a full-time four wheel drive vehicle in order to prevent the vehicle from experiencing the phenomenon commonly known as tight cornering brake, which is a braking condition due to a difference in rotational speeds between the front and rear wheels when the vehicle makes a tight turn at low speed on a road surface having high friction coefficient. On the other hand, it is necessary to provide a differential motion limiting mechanism for stopping or limiting the operation of the differential gear, since the existence of the center differential gear 33' results in a condition where no torque can be transmitted, due to the operation of the differential gear, when any one of the wheels of the four wheel drive vehicle loses grip. The conventional differential motion limiting mechanism comprises a sleeve S for engaging and disengaging with for example the pinion shaft 46'a, this sleeve S being slidably supported on the shaft section 43'a of the side gear 43' through splines. As shown in the lower half section of Fig. 3, when the sleeve S is retracted into the shaft section 43'a, the center differential gear 33' is in its operating condition, whereas when it is extended from the shaft section 43'a and its front end engages the end of pinion shaft 46'a as in a dog clutch, the center differential gear 33' is locked.

With a mechanical differential motion limiting mechanism, such as the dog clutch type mentioned above, if the difference in rotational speeds between the side gear 43' and the pinion shaft 46'a is large during abrupt turns it is difficult to engage the sleeve S, and also if a large surface pressure due to torque acts upon the engaged tooth surfaces of the sleeve S with the pinion shaft 46'a it is difficult to disengage the sleeve S. Hence, it is impossible to engage and disengage the differential motion limiting mechanism, smoothly and swiftly.

An object of the present invention is to provide a differential motion limiting mechanism for a four wheel drive vehicle, which can be engaged and disengaged smoothly and swiftly, by use of a hydraulic friction clutch in the differential motion limiting mechanism.

According to the present invention, a power transmission device for a four wheel drive vehicle comprises an automatic transmission, a front wheel differential gear, a differential motion limiting device, a casing having a ring gear meshed with an output gear of said automatic transmission and a transfer unit having a centre differential gear, said differential motion limiting device comprising a hydraulic friction clutch disposed between a diff-carrier of said front wheel differential gear and said casing which covers said diff-carrier and which is a transmitting member arranged co-axially with said diff-carrier, said casing being associated with one of the elements of said centre differential gear and said diff-carrier being associated with another of the elements of said centre differential gear.

Preferably, said hydraulic friction clutch is a wet multiple disc type clutch.

It is desirable to arrange the front wheel differential gear, the differential motion limiting mechanism and the centre differential gear co-axially with each other, so that a diff-carrier in the centre differential gear is associated with the casing through a first hollow shaft, and one of the side gears is associated with the diff-carrier in the front wheel differential gear through a second hollow shaft fitted over a front axle extending from the front wheel differential gear, and fitted inside the first hollow shaft.

An example of a power transmission device for a four wheel drive vehicle in accordance with the present invention is described below with reference to the accompanying drawings wherein:-

Figure I is a cross sectional view illustrating a major part of a power transmission device according to the present invention;

Figure 2 is a cross sectional view illustrating a power transmission device for a four wheel drive vehicle to which the present invention is applied; and

Figure 3 is a cross sectional view illustrating a transfer unit provided with a conventional centre differential gear.

The present invention shall now be explained in one embodiment form with reference to the drawings.

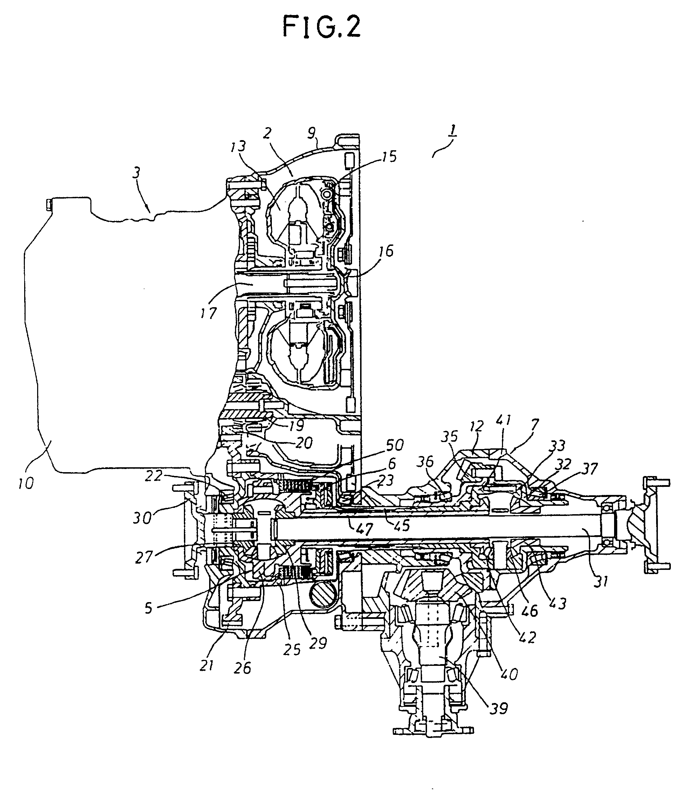

A power transmission device 1 for a transverse front-engine full-time four wheel drive vehicle, is provided, as shown in Fig. 2, with a torque converter unit 2, an automatic transmission section 3, a front wheel differential gear 5, a differential motion limiting mechanism 6 and a transfer unit 7, these being disposed in a trans-axle housing 9, a trans-axle casing 10 and a transfer casing 12 which are jointed to each other. The torque converter section 2 is composed of a torque converter 13 and a lock-up clutch 15, the rotation of the engine output shaft 16 being transmitted through them to an input shaft 17. The automatic transmission 3 is composed of a three stage planetary gear unit which is controlled by clutch and brake, the rotation of the input shaft 17 being subjected to speed reduction at any of the first, second, third, overdrive and reverse gear stages and transmitted to an output gear 20 rotatably supported on a shaft 19.

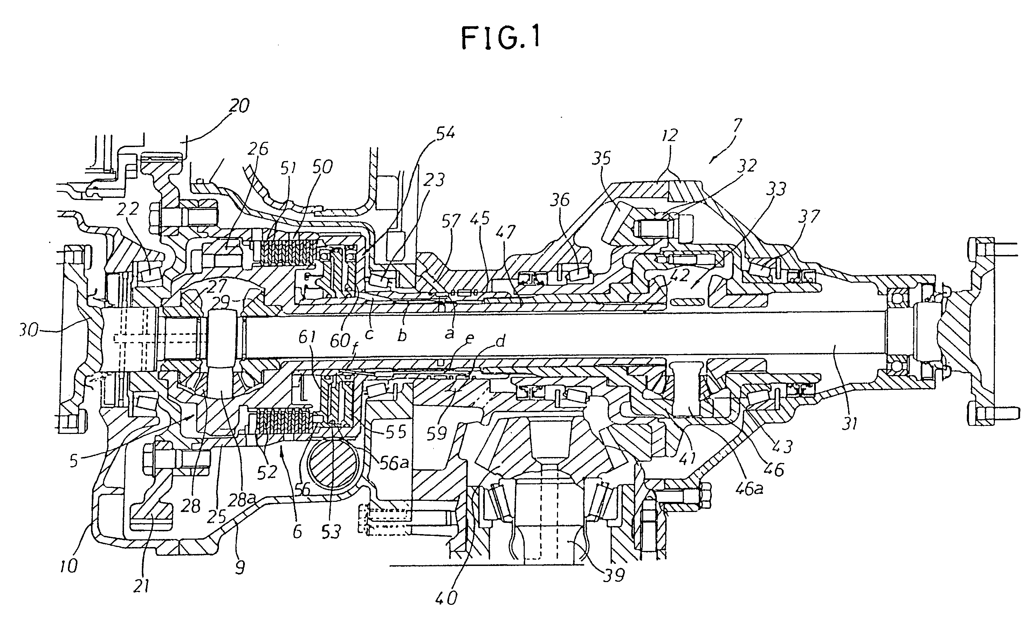

As shown in Fig. 1 in detail, the front wheel differential gear 5 is coaxially disposed in a mount casing 25 securing a first ring gear 21 meshed with the gear 20 and which is supported by the casings 10, 9 through tapered roller bearings 22, 23, its front diff-carrier 26 being rotatably incorporated in the mount casing 25. The diff-carrier 26 rotatably supports pinion shaft 28a extending in the radial direction supporting a pinion 28, and left and right hand side gears 27, 29 extending laterally. The side gears 27, 29 are drivingly coupled to front axles 30, 31. The two piece transfer casing 12 is incorporated at the right side of the first ring gear mount casing 25 and the front wheel differential gear 5, at the rear of the engine, and the transfer unit 7 is disposed within the transfer casing 12, being coupled coaxially with the first ring gear mount casing 25 and the front wheel differential gear 5. The transfer unit 7 comprises a two piece second ring gear mount casing 32 supporting a rear wheel drive second ring gear 35, and which is rotatably supported by the transfer casing 12 through a pair of tapered roller bearings 36, 37.

The second ring gear 35 is meshed with a gear 40 on a drive pinion shaft 39 that is drivingly coupled to rear axles through a known propeller shaft and a known rear wheel drive differential gear (not shown). The center differential gear 33 is disposed within the second ring gear mount casing 32, and has a cantilever structure diff-carrier 41 which is held and supported between the inside of the second ring gear mount casing 32 and the outside of the left hand side gear 42. The rotation of the first ring gear mount casing 25 is transmitted to the diff-carrier 41 through the first hollow shaft 45. Pinion shaft 46a is supported by the diff-carrier 41. The second ring gear mount casing 32 is spline-coupled directly to the right hand side gear 43, and the diff-pinion 46 fitted on the pinion shaft 46a is meshed with both left and right hand side gears 42, 43, the right front axle piercing through both side gears 42, 43 and projecting rightward from the right side end of the transfer casing 12. The left hand side gear in the center differential gear 33 is coupled to the front diff-carrier 26 in the front wheel differential gear 5 through a second hollow shaft 47 drivingly spline-coupled to the left side end of the side gear 42 and rotatably incorporated over the front axle 31.

The differential motion limiting mechanism 6 is disposed in the first ring gear mount casing 25 which is arranged coaxially with the front wheel differential gear 5 to cover the front wheel differential gear 5, and comprises wet multiple disc clutch 50. The clutch 50 has outer friction plates 51 coupled to the mount casing 25 and inner friction plates 52 coupled to the diff-carrier 26, the friction plates being adapted to be compressed by the first and second pistons 55, 56 disposed in a cylinder 54 formed in the mount casing 25. A reaction plate 53 is disposed in oil-tight manner between the first and second pistons 55, 56 within the cylinder, hence these pistons being arranged to constitute a double piston mechanism in which the first piston 55 abuts against the outer peripheral flange section 56a of the second piston 56, while the second piston 56 abuts in turn against one side of the reaction plate 53. Oil passages 57, 59 are formed in the transfer casing 12 in the part facing the transfer axle housing 9, at different angular positions, the first oil passage 57 communicating with an oil chamber 60 acting upon the first piston 55, through annular groove a and oil grooves b, c formed in the first hollow shaft 45, while the second oil passage 59 communicates with an oil chamber 61 acting upon the second piston 56 through annular groove d and oil grooves e, f.

Next, explanation will be made on the operation of the above-mentioned arrangement.

The revolutions of the engine are transmitted to the automatic transmission 3 through the torque converter 13 or the lock-up clutch 15, and subjected to a speed reduction by the automatic transmission 3, then delivered to the output gear 20, and on to the first mount casing 25 through the first ring gear 21. During normal operation, no hydraulic pressure is fed into the hydraulic chambers 60, 61 and therefore, the wet multiple disc type clutch remains in disengaged condition. In this condition, the rotation of the first mount casing 25 is transmitted to the diff-carrier 41 in the center differential gear 33 through the first hollow shaft 45, and is then distributed and transmitted from the diff-pinion 46 to the left and right hand side gears 42, 43. The rotation of the left hand side gear 42 is transmitted to the diff-carrier 26 of the front wheel differential gear 5 through the second hollow shaft 47 and is then distributed and transmitted from the diff-pinion 28 to the side gears 27, 29 from which the rotation is transmitted to the left and right front axles 30, 31. Meanwhile, the rotation of the right hand side gear 43 is transmitted to the second mount casing 32 spline-coupled therewith, and then transmitted through the rear wheel drive ring gear 35 and gear 40 to the drive pinion shaft 39 from which the rotation is transmitted to the left and right rear axles through the propeller shaft and the rear wheel differential gear (not shown).

In case where tire slippage may occur on a snowy or frozen road surface or the like, or in case any of the wheels drops in a gutter and loses grip, hydraulic pressure is fed into the oil chambers 60, 61 to engage the wet multiple disc clutch 50. In this condition the rotation of the first mount casing 25 is transmitted to the diff-carrier 26 in the front wheel differential gear 5 through the clutch 50, and then is transmitted from the front wheel differential gear 5 to the left and right axles 30, 31. Simultaneously, the diff-carrier 41 and the left hand side gear 42 in the center differential gear 33 integrated with the first mount casing 25 and the diff-carrier 26 respectively through the hollow shafts 45, 47 are rotated in unison with no differential motion, transmitting rotation to the second mount casing 32. With this arrangement, revolutions equal to that of the front wheel drive diff-carrier 26 is transmitted to the rear wheel drive ring gear 35 to drive the left and right rear axles.

At this stage, the first and second pistons 55,56 may be selectively operated in accordance with the condition of the road surface. When it is desirable to allow a certain degree of difference in rotational speeds between the front and rear wheels, for example on a snowy road surface or the like, hydraulic pressure is fed into the oil chamber 60 alone through the oil grooves a, b, c. Then the first piston 55 presses the flange section 56a of the second piston 56 to engage the wet multiple disc clutch 50 with a relatively small force. In this condition, when a difference in torque between the front and rear wheels exceeds a predetermined value, the wet multiple disc type clutch 50 slips to allow the torque to be born by the center differential gear 33 so that required torque can be transmitted to the front and rear wheels even when one of the wheels slips, while avoiding tight cornering brake phenomenon and any tire slippage due to rotational difference upon cornering. When any one of the front and rear wheels drops in a gutter, in addition to supply of hydraulic pressure into the abovementioned oil chamber 60, hydraulic pressure is also fed into the oil chamber 61 through the oil passage 59 and oil grooves d, e, f. Then, the compressive force acting in the oil chamber 61 between the second piston 56 and the reaction plate 53 would also act upon the second piston 56 in addition to the force exerted by the first piston 55, engaging the wet multiple disc clutch 50 with a relatively large force. In this condition, the clutch allows virtually no slip so that equal revolution is transmitted to both front and rear wheels, avoiding disabling of the transmittion to allow the wheel to escape from the gutter.

Although it has been explained in the embodiment mentioned above that the wet multiple disc clutch 50 is actuated by a double piston mechanism, it may also be actuated by an ordinary hydraulic actuator composed of one piston.

According to the present invention, since the differential motion limiting device 6 is constituted by a hydraulic friction clutch 50, it can be switched between its engagement and disengagement conditions, smoothly and swiftly, thereby enabling appropriate and quick change over of the four wheel drive mode in accordance with road conditions even with a full-time four wheel drive vehicle. Further, since the hydraulic friction clutch 50 is disposed between the diff-carrier 26 in the front wheel differential gear 5 and the ring gear mount casing 25 covering the diff-carrier 26 and which is a transmitting member arranged coaxially with the diff-carrier, both diff-carrier and mount casing 25 being associated with the elements 41, 42 included in the center differential gear 33, the power transmission device can be compact even with the use of a hydraulic frictional material clutch 50 as the differential motion limiting device 6. The arrangement of oil passages 57, a, b, c, 59, d, e, f for controlling the clutch 50 also can be simple. The power transmission device for a four wheel drive vehicle can be obtained by slight modification to a power transmission device for a front engine-front wheel drive vehicle, facilitating coping with wide variation of vehicle types. Further, since the hydraulic frictional material clutch 50 is disposed on the downstream side of the center differential gear 33, relative rotation between outer frictional members 51 and inner frictional members 52 is relatively small, and therefore, engagement shocks upon switching modes are extremely slight and advantageous in controlling slippage.

By arranging the front wheel differential gear 5, the differential motion limiting mechanism 6 and the center differential gear 33 coaxially with each other, in turn by arranging the front axle 31, the first hollow shaft 45 and the second hollow shaft 47 coaxially with each other, the overall size of the power transmission device for a four-wheel drive vehicle, particularly lengthwise of the vehicle, can be made substantially equal to that of a front engine-front wheel drive vehicle.

By comprising the hydraulic friction clutch by a wet multiple disc type clutch 50, and controlling the clutch 50 controlled by a double piston mechanism 55, 56, slippage control can be made simple without using complicated arrangements such as a pressure regulating solenoid or duty control.

## Claims

1. A power transmission device (1) for a four wheel drive vehicle, comprising an automatic transmission (3), a front wheel differential gear (5), a differential motion limiting device (6), a casing (25) having a ring gear (21) meshed with an output gear (20) of said automatic transmission (3) and a transfer unit (7) having a centre differential gear (33), said differential motion limiting device (6) comprising a hydraulic friction clutch (50) disposed between a diff-carrier (26) of said front wheel differential gear (5) and said casing (25) which covers said diff-carrier (26) and which is a transmitting member arranged co-axially with said diff-carrier (26), said casing (25) being associated with one (41) of the elements of said centre differential gear (33) and said diff-carrier (26) being associated with another one (42) of the elements of said centre differential gear (33).

2. A power transmission device according to claim 1, in which said one of the elements in said centre differential gear (33) is a diff-carrier (41) while said another one of the elements is one of the side gears (42); said diff-carrier (41) being associated with said casing (25) through a first hollow shaft (45); said one of the side gears (42) being associated with the diff-carrier (26) of said front wheel differential gear (5) through a second hollow shaft (47) fitted over a front axle (31) extending from said front wheel differential gear (5) and fitted within said first hollow shaft (45); and said front wheel differential gear (5), said differential motion limiting device (6) and said centre differential gear (33) being arranged co-axially with each other.

3. A power transmission device according to claim 1 or claim 2, in which said hydraulic friction clutch is a wet multiple disc type clutch (50).

4. A power transmission device according to any one of claims 1 to 3, in which said hydraulic friction clutch (50) includes clutch plates (51,52) pressed together by a double piston mechanism composed of first and second pistons (55,56).

5. A power transmission device according to claim 4, in which each of said first and second pistons (55,56) is acted upon by hydraulic pressure fed through individual passages (57, a,b,c; 59, d,e,f).

6. A power transmission device according to any one of claims 1 to 3, in which said hydraulic friction clutch (50) includes clutch plates (51,52) pressed together by a hydraulic actuator composed of one piston.

## Revendications

1. Dispositif de transmission de puissance (1) pour un véhicule à quatre roues motrices, comprenant une transmission automatique (3), un engrenage de différentiel de roues avant (5), un dispositif limiteur de course de différentiel (6), un carter (25) présentant une couronne dentée de volant (21) engrenée sur un engrenage de sortie (20) de ladite transmission automatique (3) et une unité de transfert (7) présentant un engrenage de différentiel central (33), ledit dispositif limiteur de course de différentiel (6) comprenant un embrayage hydraulique à frottement (50) disposé entre un porte-différentiel (26) dudit engrenage de différentiel des roues avant (5) et ledit carter (25) qui couvre ledit porte-différentiel (26) et qui constitue un membre de transmission disposé de façon co-axiale par rapport audit porte-différentiel (26), ledit carter (25) étant associé à un (41) des éléments dudit engrenage de différentiel central (33) et ledit porte-différentiel (26) étant associé à un autre (42) des éléments dudit engrenage de différentiel central (33).

2. Dispositif de transmission de puissance selon la revendication 1, où ledit élément des éléments dans ledit engrenage de différentiel central (33) est un porte-différentiel (41) tandis que ledit autre élément des éléments est un des pignons soleil (42); ledit porte-différentiel (41) étant associé audit carter (25) au moyen d'un premier arbre creux (45); ledit pignon soleil (42) étant associé au porte-différentiel (26) dudit engrenage de différentiel de roues avant (5) au moyen d'un second arbre creux (47) monté au-dessus d'un essieu avant (31) se prolongeant dudit engrenage de différentiel des roues avant (5) et monté dans ledit premier arbre creux (45); et ledit engrenage de différentiel des roues avant (5), ledit dispositif limiteur de course du différentiel (6) et ledit engrenage de différentiel central (33) étant disposés de façon coaxiale les uns par rapport aux autres.

3. Dispositif de transmission de puissance selon la revendication 1 ou la revendication 2, où ledit embrayage hydraulique à frottement est un embrayage à bain d'huile de type multidisques (50).

4. Dispositif de transmission de puissance selon l'une des revendications 1 à 3, où ledit embrayage hydraulique à frottement (50) comporte des plaques d'embrayage (51, 52) pressées ensemble par un mécanisme à doubles pistons composé de premier et second pistons (55, 56).

5. Dispositif de transmission de puissance selon la revendication 4, où chacun desdits premier et second pistons (55, 56) reçoit l'effet d'une pression hydraulique exercée à travers des passages individuels (57, a, b, c; 59, d, e, f).

6. Dispositif de transmission de puissance selon l'une des revendications 1 à 3, où ledit embrayage hydraulique à frottement (50) comporte des plaques d'embrayage (51, 52) pressées ensemble par un actionneur hydraulique composé d'un piston.

## Patentansprüche

1. Lastschaltgetriebevorrichtung (1) für ein vierradantriebenes Fahrzeug, mit einem Automatikgetriebe (3), einem Vorderraddifferential (5), einem Differentialbewegungsbegrenzer (6), einem Gehäuse (25) mit einem Ringrad (21), das mit einem Abtriebrad (20) des Automatikgetriebes (3) kämmt, und einer Übertragungseinheit (7) mit einem Zentraldifferential (33), wobei der Differentialbewegungsbegrenzer (6) eine hydraulische Reibkupplung (50) aufweist, die zwischen einem Differentialradträger (26) des Vorderraddifferentials (5) und dem Gehäuse (25) angeordnet ist, das den Differentialradträger (26) abdeckt und das ein koaxial mit dem Differentialradträger (26) angeordnetes Übertragungsglied ist, und wobei das Gehäuse (25) mit einem Element (41) des Zentraldifferentials (33) und der Differentialradträger (26) mit einem anderen Element (42) des Zentraldifferentials (33) verbunden ist.

2. Lastschaltgetriebevorrichtung nach Anspruch 1, in der das eine Element in dem Zentraldifferential (33) ein Differentialradträger (41) und das andere Element eines der Seitenräder (42) ist, wobei der Differentialradträger (41) mit dem Gehäuse (25) über eine erste Hohlwelle (45) verbunden ist, das ein Seitenrad (42) mit dem Differentialradträger (26) des Vorderraddifferentials (5) über eine zweite über einer Vorderachse (31) angebrachten Hohlwelle (47) verbunden ist, die sich vom Vorderraddifferential (5) erstreckt und innerhalb der ersten Hohlwelle (45) angebracht ist, und wobei das Vorderraddifferential (5), der Differentialbewegungsbegrenzer (6) und das Zentraldifferential (33) koaxial zueinander angeordnet sind.

3. Lastschaltgetriebevorrichtung nach Anspruch 1 oder 2, in der die hydraulische Reibkupplung eine Naßmehrscheibenkupplung (50) ist.

4. Lastschaltgetriebevorrichtung nach einem der Ansprüche 1 bis 3, in der die hydraulische Reibkupplung (50) Kupplungsplatten (51, 52) aufweist, die durch einen aus ersten und zweiten Kolben (55, 56) zusammengesetzten Doppelkolbenmechanismus zusammengedrückt werden.

5. Lastschaltgetriebevorrichtung nach Anspruch 4, in der jeder der ersten und zweiten Kolben (55, 56) durch mittels individueller Durchgänge (57, a, b, c; 59, d, e, f) zugeführtem Hydraulikdruck betätigt wird.

6. Lastschaltgetriebevorrichtung nach einem der Ansprüche 1 bis 3, in der die hydraulische Reibkupplung (50) Kupplungsplatten (51, 52) aufweist, die durch ein aus einem Kolben zusammengesetztes hydraulisches Stellglied zusammengedrückt werden.

# FIG.1

# FIG.2

# FIG.3

PRIOR ART